# EUROPÄISCHE PATENTSCHRIFT

(11) **EP 1 537 946 B1**
(45) Veröffentlichungstag und Bekanntmachung des Hinweises auf die Patenterteilung: **16.07.2008**
(21) Anmeldenummer: 04028702.1
(22) Anmeldetag: 03.12.2004
(51) Int. Cl.: B23Q 17/00, B23Q 11/00, G01B 13/12

(54) **Verfahren zur Auflagekontrolle bei Werkzeugmaschinen und Auflagekontrollvorrichtung**
Process and device for controlling correct seating of a part on a surface
Méthode et dispositif de contrôle du contact d'un élément avec une surface

(30) Priorität: 03.12.2003 DE 10356883
(43) Veröffentlichungstag der Anmeldung: 08.06.2005
(73) Patentinhaber: Grob-Werke GmbH & Co. KG, 87719 Mindelheim (DE)
(72) Erfinder: Strobel, Richard, 87776 Sontheim (DE); Kuhn, Anton, 87742 Dirlewang (DE)
(74) Vertreter: Pfister, Stefan Helmut Ulrich

(56) Entgegenhaltungen:
- EP-A- 1 048 926
- EP-A- 1 078 713
- EP-A- 1 338 374
- DE-A1- 2 307 046
- DE-A1- 10 155 135
- DE-A1- 10 223 592
- US-B1- 6 280 291

## Beschreibung

Die Erfindung betrifft ein eine Werkzeugmaschine nach dem Oberbegriff von Anspruch 8 und Verfahren zur Auflagekontrolle bei einer solchen Werkzeugmaschine (Siehe, z.B., EP-1 338 374-A).

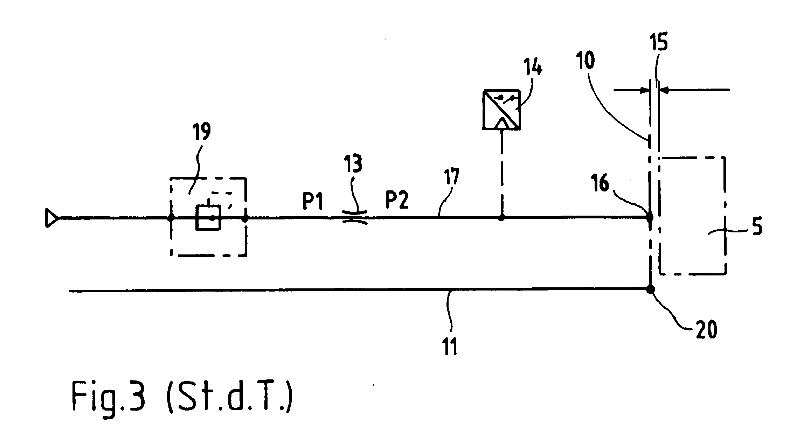

Derartige Verfahren beziehungsweise Vorrichtungen sind bekannt. Es handelt sich dabei um Verfahren, bei welchen mittels Pneumatik nach dem Staudruckprinzip gearbeitet wird. Ein Beispiel dafür ist in der Figur 3 dargestellt. Dazu wird in der Werkzeugmaschine an den Auf- beziehungsweise Anlagepunkten ein Pneumatik-Leitungssystem installiert, welches mit Druck beaufschlagbar ist. Dieses Pneumatik-System ist zusätzlich zu gegebenenfalls vorhandenen Kühl-/Schmierflüssigkeitsleitungssystemen zu installieren. In dem Leitungssystem selbst wird ein konstanter Eingangsdruck erzeugt. Dies geschieht beispielsweise durch ein Druckregelventil. Eine nachgeschaltete Blende oder Drossel erzeugt einen Druckabfall in dem Leitungssystem. Der Druck wird zwischen Blende oder Drossel und der Meßfläche gemessen, an welcher Luftaustrittsöffnungen vorgesehen sind, über die die Luft entweichen kann, wenn kein Werkstück, Werkzeug oder dergleichen dort positioniert ist. Der Druck zwischen Blende oder Drossel und Meßfläche beziehungsweise Meßpunkt ist abhängig zum Verhältnis zwischen Blende oder Drosseleinstellung und Luftspalt zwischen den Auflagepunkten der Werkstücke beziehungsweise Anlagestücke. Die daraus resultierende Druckänderung wird direkt, oder indirekt über einen pneumatischen Grenzwertschalter, elektrisch erfaßt und in der Maschinensteuerung verarbeitet. Entsprechend des Leitungsvolumens und der geforderten Genauigkeit verändert sich die Schaltzeit.

Da die Auf- beziehungsweise Anlagepunkte für das Werkstück stets sauber sein müssen, ist es notwendig, die Anlageflächen ständig von gegebenenfalls vorhandenen Spänen zu reinigen. Hierzu wird zusätzlich Kühlmittel oder Blasluft eingesetzt. Insofern ist das Leitungssystem ständig mit Druck zu beaufschlagen, um auch das Eindringen der Flüssigkeit in die Meßkanäle zu vermeiden. Das sichere Erkennen des Aufliegens eines Gegenstandes auf der Auflagefläche war, entsprechend den geforderten Genauigkeitsanforderungen, sinnvollerweise nur mit pneumatischen Leitungssystemen realisierbar, die, wie bereits erwähnt, zusätzlich in den Auflageflächen vorgesehen werden mußten.

Bedingt durch den schwankenden Eingangsdruck in den mit Kühl/Schmierflüssigkeit arbeitenden Systemen, war die geforderte Genauigkeit nicht erreichbar, wie sie in pneumatisch beaufschlagbaren Systemen erreicht werden konnte. Insofern gibt es nach dem Stand der Technik keine hydraulischen Systeme der Auflagekontrolle, die mit ausreichender Genauigkeit und Zuverlässigkeit arbeiten.

Aus dem Stand der Technik ist auch eine Vorrichtung zur pneumatischen Positionskontrolle bekannt, wobei über ein Pneumatik-Leitungssystem an einer Drosseleinrichtung in Strömungsrichtung der Druck vor und nach dieser Drossel gemessen wird und ein Differenzdrucksensor den jeweiligen Differenzdruck erfaßt. Es handelt sich allerdings auch um ein bereits zuvor beschriebenes Auflagenkontrollsystem, welches mittels eines zusätzlichen pneumatischen Leitungssystems für die Messung bzw. für die Auflagenkontrolle selbst ausgestattet ist und was dadurch sehr aufwendig wird.

Eine weitere pneumatische Auflagenkontrolleinrichtung mit einem Differenzdrucksensor ist bekannt. Auch hier wird mittels eines Differenzdrucks und der Auswertung über einen Differenzdrucksensor gearbeitet. Auch für dieses pneumatische Auflagenkontrollsystem ist ein zusätzliches Pneumatik-Leitungssystem zusätzlich zu dem Kühl- bzw. Spülmittelsystem der Werkzeugmaschine erforderlich.

Ein weiteres Auflagenkontrollsystem ist aus dem Stand der Technik bekannt, welches bereits mit einem flüssigen Medium arbeitet. Hierbei wird allerdings die Lage des Werkstücks auf einer Referenzfläche durch einen Positionsdetektor bestimmt. Dieser bestimmt die Lage des Werkstücks aufgrund des Gegendrucks und der Entfernung. Auch diese Maßnahme ist äußerst kompliziert in der Herstellung. Zudem sind Detektoren aufgrund der Feuchtigkeitseinwirkungen relativ störanfällig.

Ausgehend von dem zuvor beschriebenen Stand der Technik ist es Aufgabe der Erfindung, ein Verfahren und eine Vorrichtung zur Verfügung zu stellen, mittels derer eine Auflagekontrolle bei Werkzeugmaschinen dahingehend verbessert werden soll, daß dieses zuverlässig, insbesondere bei Druckschwankungen arbeitet.

Die Erfindung ist im Anspruch 1 definiert.

Das erfindungsgemäße Verfahren zur Auflagenkontrolle ist im Anspruch 1 definiert.

Entsprechend einer Variante der Erfindung wurde gefunden, daß es von Vorteil ist, wenn die Endöffnung des Leitungssystems, die Auflage bzw. die Spannfläche durch das Medium für einen Auflage- bzw. Spannvorgang gereinigt wird. Dies kann beispielsweise so gesteuert werden, daß vor dem Auflegen bzw. Spannen ein Druckstoß initiiert wird, um gegebenenfalls vorhandene Verunreinigungen zu beseitigen. Man kann selbstverständlich auch eine einfache Pumpe vorsehen, die dann kurz vor dem Positionieren bzw. Spannen nochmals betätigt wird, um Kühl/Spülflüssigkeit nochmals an der Auflagefläche bzw. Spannfläche vorbeizuführen und damit vorhandene Verunreinigungen zu beseitigen.

Ein Verfahren, wie zuvor beschrieben, zeichnet sich entsprechend einer Weiterbildung dadurch aus, daß wenigstens eine Endöffnung des Leitungssystems in bzw. an wenigstens einem Spannmittel, zum Beispiel in Öffnungen für das Eingreifen von Spannbolzen, vorgesehen ist, und diese vor oder während des Spannvorgangs mit dem Medium gespült wird. Auch dadurch läßt sich eine verbesserte Positionierung, ein verbessertes Spannen und insbesondere die Kontrolle beider Vorgänge erreichen.

Erfindungsgemäß wurde auch gefunden, daß es von Vorteil ist, wenn der Gegenstand für den Positionier- bzw. Spannvorgang gegebenenfalls nochmals angehoben wird, wenn eine unkorrekte Positionierung und/oder Spannung festgestellt wird, um die Auflagefläche und/oder die Endöffnung und/oder die Spannmittel durch das Medium zu reinigen und anschließend der Positionier- bzw. Spannvorgang wiederholt wird. Dies ist steuerungstechnisch und anlagentechnisch kein Problem. Bei vorhandenen Spannvorrichtungen an Werkzeugmaschinen sind in der Regel entsprechende Positionier- bzw. Hebemittel vorhanden, um die notwendigen Bewegungen auszuführen. Über die Maschinensteuerung lassen sich derartige Bewegungen in sehr einfacher Weise steuern.

Desweiteren schlägt eine Weiterbildung des erfindungsgemäßen Verfahrens vor, daß der Differenzdruck permanent erfaßt, verrechnet und als Signal zur Steuerung einer Werkzeugmaschine genutzt wird.

Dabei hat es sich als Vorteil herausgestellt, wenn die Verrechnung des Differenzdruckes in einer Steuerung, vorzugsweise in der Maschinensteuerung der Werkzeugmaschine vorgenommen wird. Diese erfindungsgemäße Variante wird man immer dann wählen, wenn bereits eine ausreichend leistungsfähige Maschinensteuerung der Werkzeugmaschine vorhanden ist. Man kann dann auf relativ einfache Drucksensoren zurückgreifen, die die entsprechenden Werte als Signale, zum Beispiel elektrische Signale, an die Maschinensteuerung oder an die Steuerung liefern.

Selbstverständlich ist es erfindungsgemäß auch vorgesehen, daß die Verrechnung des Differenzdruckes in wenigstens einem der Drucksensoren erfolgt. Dabei wird hier ein bereits intelligenterer Drucksensor eingesetzt, der beide Werte der Drucksensoren erfaßt und verrechnet. Dies hat zur Folge, daß der ermittelte Wert dann in einer Steuerung oder in der Maschinensteuerung nicht bearbeitet werden muß, falls diese vorhanden ist oder aber wenn keine Steuerung vorhanden ist, daß dann die entsprechenden Werte beispielsweise angezeigt werden. Dies setzt allerdings vorraus, daß wenigstens ein hochwertiger Drucksensor als sogenannter Mastersensor verwendet wird, um diese Aufgabe realisieren zu können.

Ein weiterer Aspekt des erfindungsgemäßen Verfahrens ist dadurch angegeben, daß der Druck beziehungsweise der Differenzdruck auf einen Sollwert eingestellt wird, bei dessen Erreichen beziehungsweise Unterschreiten die Steuerung einen Schaltvorgang, beispielsweise einen Signalwechsel vornimmt. Dies ermöglicht eine exakte Ermittlung, ob ein Gegenstand an den Auflagestellen bzw. an den Spannmitteln bzw. deren korrespondierend zusammenwirkenden Flächen anliegt oder nicht bzw. ob der Gegenstand exakt gespannt ist, oder nicht.

Das erfindungsgemäße Verfahren zeichnet sich entsprechend einer Weiterbildung auch dadurch aus, daß der Eingangsdruck vor der Drosselstelle ebenfalls ausgewertet wird. Dies erlaubt anhand der Druckdifferenz, welche sich zwischen dem ersten Drucksensor, welcher sich vor der Drosselstelle befindet und dem zweiten Drucksensor, der sich nach der Drosselstelle befindet, ständig ausgewertet wird, was zu einer sehr hohen Genauigkeit auch bei schwankenden Drücken, wie sie beispielsweise in einem Kühlleitungssystem vorhanden sind, führt.

Das erfindungsgemäße Verfahren zeichnet sich auch dadurch aus, daß in Abhängigkeit des Eingangsdrucks und des Differenzdrucks von der Steuerung ausgewertet wird, ob ein Gegenstand an der Auflagefläche bzw. Spannfläche anliegt oder nicht. Dies wird dann gegebenenfalls durch entsprechende Schaltvorgänge oder Signalwechsel angegeben.

Das Verfahren wird beispielsweise derart durchgeführt, daß der Eingangsdruck als Schließerkontakt auf einen bestimmten Wert eingestellt ist und bei Erreichung dieses Wertes die Steuerung einen ersten Signalwechsel von "0" auf "1" vornimmt und der Differenzdruck als Öffnerkontakt auf einen bestimmten geringeren Wert eingestellt ist und die Steuerung bei Unterschreitung dieses Wertes einen zweiten Signalwechsel von "0" auf "1" vornimmt. Die Steuerung kann dabei als elektrische Steuerung ausgebildet sein, so daß die dadurch erstellten elektrischen Signale durch eine Maschinensteuerung beispielsweise leicht verarbeitbar sind. Aus dieser Schaltung beziehungsweise Einstellung ergibt sich folgende Logik:

| Logik | Signal 1 Eingangsdruck | Signal 2 Differenzdruck >0,08 bar |
|---|---|---|
| keine Kühl-/Schmierflüssigkeit kein Werkstück vorhanden | "0" | "0" |
| Kühl-/Schmierflüssig.> 2,5 bar kein Werkstück vorhanden | "1" | "0" |
| Kühl-/Schmierflüssig.> 2,5 bar Werkstück richtig vorhanden | "1" | "1" |

Die Schaltung kann beispielsweise derart ausgebildet sein, daß in dem Kühlmittelkreislauf ein erster Sensor als Mastersensor angeordnet wird. In der Reihenfolge des Kühlleitungssystems weiter folgt dann die Anordnung einer Blende zur Reduzierung des Druckes. Daran schließt sich dann der zweite Drucksensor als einfacher Drucksensor an. Das Leitungssystem wird weiter zum Auflagesystem, bestehend aus einer oder mehreren Auflagestellen, oder zum Spannsystem, bestehend aus einer oder mehreren Spannstellen bzw. Spannmitteln, geleitet. Die Auflagestellen können nicht nur als direkte Auflagestelle für ein Werkstück vorgesehen sein. Entsprechend mehreren vorzugsweisen Varianten ist es selbstverständlich auch möglich, die Auslaßöffnungen an Werkzeugaufnahmen, insbesondere am Spindelkopf der Bearbeitungsspindel einer Werkzeugmaschine vorzusehen, wodurch angezeigt wird, ob das Werkzeug selbst oder die Spindel richtig positioniert sind. Wird kein derartiges Signal an die Steuerung geleitet, wird beispielsweise in der Steuerung hinterlegt, daß die Maschine dann den Bearbeitungsvorgang nicht durchführen kann. Vielmehr ist der Positioniervorgang nach gegebenenfalls einer Spülreinigung an der Werkzeugaufnahme dann erneut vorzunehmen. Erst wenn das Werkzeug richtig positioniert ist, erfolgt die Freigabe des Bearbeitungsvorganges durch die Werkzeugmaschine. Die Auflageflächen oder -stellen können daher auch als Anlageflächen betrachtet werden.

Der einfache Drucksensor und der Mastersensor sind miteinander gekoppelt, so daß der Mastersensor die Druckdifferenz ermitteln und als elektrisches Signal an die Steuerung weiterleiten kann. Damit wird eine sehr einfache und doch wirkungsvolle Auflage- bzw. Spannkontrolle zur Verfügung gestellt, die unabhängig von Druckschwankungen des Eingangsdruckes, wie er regelmäßig in Spül- oder Kühlmittelkreisläufen vorkommt, eingesetzt werden. Es wird sichergestellt, daß der Aufwand, welcher sich nach dem Stand der Technik für die Ausführung eines zusätzlichen pneumatischen Leitungssytemes ergab, durch die Erfindung vollständig eingespart werden kann.

Das Verfahren erlaubt eine sehr hohe Genauigkeit und kommt ohne zusätzliche blasende Luft, beispielsweise für die Säuberung der Auflageflächen aus. Bei der Verwendung von Pneumatik mußte diese genau eingestellt werden, was entsprechend aufwendige Einstellungen notwendig machte. Da die pneumatischen Systeme oftmals sehr störanfällig waren und des öfteren auch unbeabsichtigt ausgeschaltet wurden, ergaben sich weitere Nachteile eines pneumatischen Systems. Die Verfügbarkeit eines Auflagekontrollsystems nach dem Stand der Technik war also eingeschränkt.

Die jetzt vorgeschlagene Lösung erlaubt demnach eine einfache und sichere Vorgehensweise zur Durchführung einer Auflage- und Spannkontrolle. Dabei eignet sich die Erfindung auch zum Nachrüsten eines Auflagekontrollsystemes an Werkzeugmaschinen, die über eine Kühl- beziehungsweise Spülmittelkreislauf verfügen. Es ist dort nicht notwendig zusätzliche Kanäle für die Luft zu bohren.

Ein weiterer Vorteil der Erfindung ist auch dadurch angegeben, daß die Messungen unabhängig von Leitungslängen jetzt sind, da der in der Flüssigkeit vorhandene Druck letztendlich der gesamten Flüssigkeit gleichermaßen zur Verfügung steht und aufgrund der Inkompressibilität von Flüssigkeiten gegenüber der Komprimierbarkeit von Luft. Dies ist auch der Grund, wieso die hydraulische Auflagekontrolle im Hydraulikkreislauf auch weit weg von der eigentlichen Auflagefläche installiert werden kann, da sich die Bedingungen nach der Auflagekontrolle in der Regel nicht mehr dramatisch verändern. Eine solche Vorgehensweise ist bei pneumatischen Systemen nahezu unmöglich, da auf einem verhältnismäßig langen Kanal die Luft natürlich komprimiert wird, was zu entsprechenden Schaltzeiten oder Ungenauigkeiten führt.

Die Erfindung stellt auch ein Verfahren, wie zuvor beschrieben, welches sich entsprechend einer Weiterbildung dadurch auszeichnet, daß der Differenzdruck im Leitungssystem zusätzlich oder ausschließlich der Bestimmung der Druchflußmenge von Kühl/Schmierflüssigkeit verwendet wird. Ausgehend von der Erkenntnis, daß insbesondere in einem mit starken Druckschwankungen behafteten System, wie einem Kühl-/Schmierflüssigkeitssystem eine Durchflußmengenmessung sehr schwierig realisierbar ist, wird hier die Druckdifferenz, welche an den beiden Sensoren vor und nach der Drosselstelle gemessen wird, dazu benutzt, um zu bestimmen, ob ausreichend Kühl-/Schmierflüssigkeit zu dem Werkzeug, zu der Werkzeugspindel beziehungsweise zu dem Werkstück gelangt. Damit kann beispielsweise festgestellt werden, wenn Störungen in diesem System vorhanden sind. Dies kann beispielsweise dadurch geschehen, daß an den Austrittsstellen der Kühl/Schmierflüssigkeit eine Verschmutzung mit Spänen vorhanden ist. Auch können Störungen innerhalb des Kühlsystems in dem Werkstück beziehungsweise in der Spindel durch das erfindungsgemäße Verfahren jetzt sicher bestimmt werden.

Ein Verfahren wie zuvor beschrieben zeichnet sich entsprechend einer Weiterbildung dadurch aus, daß in Abhängigkeit des Eingangsdruckes und des Differenzdruckes die Durchflußmenge an Kühl-/Schmierflüssigkeit von der Steuerung bestimmt und ausgewertet wird, derart, ob ein ausreichender Volumenstrom zur Kühlung und/oder Schmierung des Werkstückes, der Spindel beziehungsweise des Werkzeuges vorhanden ist oder nicht.

Eine Weiterbildung des so beschriebenen Verfahrens zeichnet sich dadurch aus, daß die Steuerung beziehungsweise die Maschinensteuerung der Werkzeugmaschine den oder die Werte der Druckdifferenz zur Bestimmung der Durchflußmenge an Kühl/Schmierflüssigkeit auswertet und bei Unterschreitung eines festgelegten Sollwertes daraus resultierende Steuerbefehle an die Werkzeugmaschine weiterleitet.

Ein speziell auf die Messung beziehungsweise Bestimmung der Durchflußmenge an Kühl-/Schmierflüssigkeit gerichtetes Verfahren, zeichnet sich entsprechend einer Weiterbildung des zuvor beschriebenen Verfahrens dadurch aus, daß das Werkstück und/oder das Werkzeug und/oder die Spindel bezüglich der Kühl/Schmierflüssigkeits-Durchflußmenge kontrolliert und ausgewertet wird, wobei entsprechende Steuerbefehle dann von der Steuerung ausgelöst werden, wenn ein bestimmter vorgegebener Sollwert unterschritten wird. Dies können beispielsweise Befehle zur Abstellung der Spindel beziehungsweise zum Spülen bestimmter Leitungsstrecken sein.

Die Verfahren der Auflagekontrolle und der Durchflußmessung beziehungsweise -kontrolle können auch selbstständig und unabhängig voneinander eingesetzt werden, wodurch ein eigenständiger Schutz beanspruchbar ist.

Die Aufgabe der Erfindung wird auch gelöst durch eine Auflagekontrollvorrichtung zur Auflagekontrolle von Gegenständen auf einer Auflagefläche bzw. in oder an den Spannmitteln einer Spannvorrichtung einer Werkzeugmaschine, insbesondere zur Durchführung des Verfahrens wie zuvor beschrieben, wobei in der Auflagefläche bzw. an wenigstens einem ersten Spannmittel ein mit Druck beaufschlagbares, Medium führendes Leitungssystem in wenigstens einer Endöffnung endet, wobei die Endöffnung von dem Gegenstand und/oder von einem zweiten , mit dem ersten Spannmittel zusammenwirkenden Spannmittel verdeckt wird, welche sich dadurch auszeichnet, daß das Leitungssystem das Kühl-/Schmiermittelleitungssystem der Werkzeugmaschine ist und in dem Leitungssystem eine Drosselstelle, vor und nach der Drosselstelle je ein Drucksensor vorgesehen ist und der Differenzdruck der von den Drucksensoren ermittelten Drücke bestimmt wird. Abweichend von der bisher üblichen Praxis, einen absoluten Druck zu messen, ist es nunmehr möglich, die Druckdifferenz eines ersten und zweiten Druckes zu messen und die daraus resultierende Größe zur Bestimmung der Auflagekontrolle sowie zur Kontrolle des Spannens zu verwenden. Bei großem Druckabfall in dem Leitungssystem ist es klar, daß die Flüssigkeit an der Auflageöffnung entweichen kann. Dabei ist dann auch die Druckdifferenz entsprechend groß. Ist der Gegenstand, dessen Auflage kontrolliert werden soll, korrekt positioniert, wird die Druckdifferenz sich auf einen geringeren Wert einstellen.

Dabei kann man über die Steuerung vorgeben, daß bestimmte Grenzwerte, beispielsweise der Eingangsdruck und der Differenzdruck vorgegeben werden, um Rückschlüsse auf die korrekte Positionierung bzw. Spannung des Gegenstandes, beispielsweise Werkstückes oder Werkzeuges ziehen zu können.

In diesem Zusammenhang wird insbesondere darauf hingewiesen, daß alle in Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur in Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

Zur Erzeugung der Druckdifferenz ist gemäß einer Weiterbildung der erfindungsgemäßen Auflagekontrollvorrichtung als Drosselstelle mindestens eine Drossel, Blende, Düse, Rohrstrecke oder dergleichen vorgesehen.

Dabei ist es von Vorteil, wenn wenigstens einer der Drucksensoren als intelligenter Drucksensor beziehungsweise sogenannter Masterdrucksensor ausgebildet ist, derart, daß er die von beiden Drucksensoren ermittelten Werte des Druckes in Werte der Druckdifferenz verrechnet, in Signale umwandelt und an die Steuerung der Werkzeugmaschine oder an eine separate Steuerung weiterleitet. Eine derartige Auflagekontrollvorrichtung bietet sich immer dann an, wenn in der Steuerung nicht mehr genügend Kapazität zur Bearbeitung der Werte vorhanden ist oder aber die Steuerung nicht für die Umwandlung von Drucksensoren bereitgestellter Signale ausgelegt ist.

Selbstverständlich ist es auch möglich, jeweils nur zwei einfache Drucksensoren vor und nach der Drosselstelle vorzusehen, die ihre Werte des ermittelten Druckes an die Steuerung weiterleiten und die Steuerung die Berechnung und Auswertung vornimmt. Diese Möglichkeit ist immer dann gegeben, wenn eine ausreichend dimensionierte Maschinensteuerung vorhanden ist, die problemlos durch das Auflagekontrollsystem und/oder Spannungskontrollsystem beziehungsweise durch die Auflagekontrollvorrichtung bereitsgestellten Werte verarbeiten kann.

Entsprechend einer vorteilhaften Weiterbildung der Erfindung ist es vorgesehen, daß der Verfahrensdruck der Vorrichtung im Niederdruckbereich bis 10 bar, vorzugsweise bis 2,5 bar eingestellt wird. Damit kann auf aufwendige Vorrichtungen beziehungsweise Systeme der Druckbereitstellung verzichtet werden. Insbesondere ist es möglich, die im Niederdruckbereich arbeitenden Spül- beziehungsweise Kühlflüssigkeitssysteme zu nutzen.

Eine Auflagenkontrollvorrichtung, wie zuvor beschrieben, zeichnet sich entsprechend einer Weiterbildung dadurch aus, daß eine Spannvorrichtung vorgesehen ist, mit Spannmitteln, mittels derer der Gegenstand oder eine den Gegenstand tragende Palette aufspannbar ist und wenigstens ein Spannmittel mit dem Leitungssystem verbunden ist. Durch die Verbindung wenigstens eines Spannmittels mit dem Leitungssystem ist jetzt neben der Auflagenkontrolle auch eine Kontrolle der ordnungsgemäßen Spannung möglich. Neben der Kontrolle, ob der Spannvorgang korrekt ausgeführt ist, ist selbstverständlich auch vorher die Kontrolle einer ordnungsgemäßen Positionierung der korrespondierenden Spannmittel der Spannvorrichtung möglich. Dies kann beispielsweise dadurch angezeigt werden, daß ein bestimmter Druckabfall bei der Positionierung noch vorhanden sein kann, der aber bestimmte Grenzwerte nicht übersteigen darf. Ist dies nicht der Fall, kann man die Steuerung der Werkzeugmaschine so ausbilden, daß die Spannvorrichtung nochmals angehoben wird und durch einen Spülstoß gegebenenfalls die Spannmittel gereinigt werden. Ist eine korrekte Positionierung gegeben und befindet sich an den Spannflächen der Spannmittel eine Verschmutzung, kann es trotzdem passieren, daß die Spannvorrichtung den Gegenstand nicht korrekt spannt. Dies wird ebenfalls durch den dadurch noch vorhandenen Spalt erkennbar, weil durch diesen Spalt Flüssigkeit entweichen kann und dadurch ein Druckabfall beziehungsweise ein anderer Differenzdruck ermittelt wird. Insofern hat man mit der erfindungsgemäßen Auflagekontrolle nicht nur eine Kontrolle der ordnungsgemäßen Auflage des Gegenstandes, sondern gleichzeitig auch noch eine Spannkontrollvorrichtung beziehungsweise Auflagenkontrollvorrichtung für die Spannmittel. Demnach zeichnet sich eine Weiterbildung der Erfindung dadurch aus, daß wenigstens eines der Spannmittel an dem Gegenstand beziehungsweise der den Gegenstand tragenden Palette vorgesehen ist.

Die Endöffnung des Kühl- bzw. Spülmittelleitungssystems ist entsprechend einer Weiterbildung in wenigstens einem der Spannmittel für das Spannen des Gegenstandes vorgesehen.

Die Endöffnung kann dabei entweder in wenigstens einer Spannvertiefung als Spannmittel der den Gegenstand tragenden Palette vorgesehen sein. In gleicher Weise ist es erfindungsgemäß ebenfalls vorgesehen, die Endöffnung des Leitungssystems in wenigstens einem der Spannbolzen als Spannmittel der Spannvorrichtung anzuordnen.

Für eine ordnungsgemäße Verbindung des Leitungssystems mit dem Spannsystem bzw. den Spannmitteln ist beispielsweise zwischen Werkzeugmaschine und Palette bzw. dem Werkstück eine Dichtung, Dichtflächen oder eine Kupplung, vorzugsweise eine Schnellkupplung im Leitungssystem vorgesehen. Die Dichtung bzw. Dichtflächen sind dabei in unterschiedlichen Ausführungsformen möglich. So ist beispielsweise eine metallische Dichtung durch eingeschliffene oder polierte Flächen genauso möglich, wie eine Lösung, bei der eine Dichtung einseitig oder beidseitig der abzudichtenden Flächen vorgesehen ist. Selbstverständlich kann dafür auch eine bekannte Kupplung für ein solches Leitungssystem, vorzugsweise eine Schnellkupplung, Einsatz finden. Die Erfindung ist auf eine solche Abdichtungsart nicht eingeschränkt. Vielmehr sind alle möglichen Dichtungsarten von der Erfindung umfaßt.

Die Endöffnung ist entsprechend einer Variante der Erfindung düsenartig ausgebildet. Dies bewirkt, daß die Kühl- bzw. Schmierflüssigkeit mit entsprechendem Druck oder entsprechend verteilt, je nachdem, wie die Auflagen bzw. Spannflächen ausgebildet sind, austreten kann.

Ein weiterer Aspekt der Auflagekontrollvorrichtung nach der Erfindung ist dadurch angegeben, daß eine Steuerung vorgesehen ist, die die Werte des Druckes, die von den Drucksensoren ermittelt beziehungsweise geliefert werden, als Schaltsignal erfaßt und auswertet. Beispielsweise können die Schaltsignale wie weiter oben beschrieben in einer entsprechenden Logik vorgegeben werden, so daß bei der Einstellung des jeweiligen Druckes die Auflagekontrollvorrichtung die entsprechenden Werte anzeigt und die dazu entsprechenden Befehle gegebenenfalls ausführt. Wie bereits erwähnt sind mindestens zwei Varianten der Erfindung möglich, nämlich derart, daß zwei Drucksensoren als einfache Drucksensoren ausgebildet sind und die Steuerung die Werte der Druckdifferenz verrechnet beziehungsweise auswertet. Es ist dabei auch möglich, die Maschinensteuerung der Werkzeugmaschine als Steuerung der Auflagekontrollvorrichtung vorzusehen, derart, daß sie die Werte der Drucksensoren erfaßt, auswertet und gegebenenfalls daraus resultierende Steuerbefehle an die Werkzeugmaschine weiterleitet. Die zweite Variante ist durch den Einsatz eines sogenannten Mastersensors gegeben, der bereits in der Lage ist, Berechnungen beziehungsweise Auswertungen vorzunehmen und an die Steuerung oder Anzeigemittel zu leiten.

Ein weiterer Aspekt der erfindungsgemäßen Auflagekontrollvorrichtung ist dadurch angegeben, daß die Drosselstelle beziehungsweise die Mittel zur Druckreduzierung beziehungsweise -änderung und die Drucksensoren in dem Kühlflüssigkeitskreislauf der Werkzeugmaschine angeordnet sind. Diese bietet den Vorteil, daß man keine zusätzlichen Systeme für die Auflage- bzw. Spannkontrolle vorsehen muß, sondern vorhandene Systeme nutzen kann. Für die Nachrüstung ist gegebenenfalls lediglich eine Auflageaustrittsöffnung an der Auflage- beziehungsweise Anlagefläche vorzusehen. Dies ist auch für Nachrüstungen relativ einfach zu realisieren.

Ein Absperrventil ist in dem Leitungssystem vorgesehen, auf welches die Mediumsteuerung wirkt und die vorzugsweise mit der Maschinentüre der Werkzeugmaschine gekoppelt ist, derart, daß das Absperrventil bei Öffnung der Türe das Leitungssystem absperrt. Damit wird verhindert, daß bei Öffnung der Maschinentüre Kühl- beziehungsweise Spülflüssigkeit weiterhin austreten kann und gegebenenfalls aus der Bearbeitungsmaschine herausspritzt oder eine eintretende Bedien- oder Wartungsperson verschmutzt beziehungsweise verletzt. Das Absperrventil ist in dem Leitunssystem nach dem zweiten Drucksensor angeordnet. Damit kann ein größerer Verlust von Kühl- beziehungsweise Spülflüssigkeit verhindert werden.

Die Gegenstände, deren Auflage kontrolliert werden sollen, sind nach der Erfindung ein zu bearbeitendes Werkstück und/oder das Bearbeitungswerkzeug selbst, und/oder ein Festanschlag, weil er immer die gleiche Position erreichen muß.

Es ist weiterhin günstig, wenn die Auflagefläche an einer Werkstückaufnahme, einem Werkstückträger oder einer Werkzeugaufnahme, insbesondere am Spindelkopf der Bearbeitungsspindel einer Werkzeugmaschine angeordnet ist. Dazu ist gegebenenfalls auch die Auflagefläche als Anlagefläche zu definieren. Dies richtet sich danach, wo die Fläche vorgesehen ist und wo die Austrittsöffnungen für die Flüssigkeit vorgesehen sind. Wird beispielsweise die Bearbeitungsspindel einer Werkzeugsmaschine auf ihren entsprechend korrekten Sitz geprüft, wird dies an den Anlageflächen der Spindel zum Antrieb hin beispielsweise vorzusehen sein. Wird dem gegenüber eine Werkzeugaufnahme mit einer Auflagekontrollvorrichtung ausgerüstet, dann müssen die Austrittsöffnungen an den Anlageflächen der Werkzeugaufnahme für das Werkzeug angeordnet sein. In gleicher Weise ist es selbstverständlich vorgesehen, daß die Auf- beziehungsweise Anlageflächen an einem Werkstückträger beziehungsweise den dazu für die Auf- beziehungsweise Anlage korrespondierenden Flächen einer Werkstückaufnahme angeordnet wird. Die Kombination mehrerer Varianten ist ebenfalls Gegenstand der Erfindung.

Für die ständige Reinigung und/oder Kühlung der Auflageflächen ist es vorgesehen, daß ein Leckagespalt an der Auflagefläche angeordnet ist. Dieser Leckagespalt ermöglicht das ständige Austreten eines Teiles des Mediums zu Kühl- und Spülzwecken. Damit können gegebenenfalls auch die Auf- beziehungsweise Anlageflächen gereinigt werden.

Eine Variante der erfindungsgemäßen Auflagekontrollvorrichtung zeichnet sich dadurch aus, daß der Leckage-Spalt an der Verbindungsstelle bzw. Auflagestelle der den Gegenstand tragenden Palette zur Werkzeugmaschine vorgesehen ist. Dadurch ist sowohl eine Auflagenkontrollvorrichtung mit Leckage-Spalt möglich, als auch das gleichzeitige Ableiten der Kühl- bzw. Spülflüssigkeit bzw. des Schmiermittels gegeben.

Erfindungsgemäß dient das Leitungssystem der Auflagekontrollvorrichtung gleichzeitig sowohl der Auflage- bzw. Spannkontrollvorrichtung als auch der Leitung von Kühl-/Spülflüssigkeit als Medium.

Eine Auflagekontrollvorrichtung, wie zuvor beschrieben, zeichnet sich gemäß einer Weiterbildung dadurch aus, daß das Leitungssystem mit der Werkzeugspindel und/oder dem Werkstück und/oder dem Werkzeug beziehungsweise der Werkzeugaufnahme zur Bestimmung der Durchflußmenge an Kühl-/Schmierflüssigkeit verbunden ist. Dadurch wird gewährleistet, daß neben der Auflagenkontrolle gleichzeitig noch die ausreichende Durchflußmenge an Kühl-/Schmierflüssigkeit kontrolliert und überwacht wird.

Gleichzeitig ist es jedoch auch möglich, die Durchflußmessung beziehungsweise -kontrolle und die Auflagekontrolle unabhängig voneinander, beispielsweise mit unabhängig voneinander arbeitenden Vorrichtungen zu realisieren, wodurch auch ein eigenständiger Schutz erlangbar ist.

Dabei ist es weiterhin von Vorteil, wenn die Steuerung und/oder wenigstens einer der Drucksensoren derart ausgebildet sind, daß die Durchflußmenge an Kühl-/Schmierflüssigkeit anhand der Druckdifferenz und/oder des Eingangsdruckes im Leitungssystem durch diese bestimmbar ist.

Die Erfindung stellt auch eine Werkzeugmaschine, insbesondere spanabhebende Werkzeugmaschine, mit einer Auflagekontrollvorrichtung, wie zuvor beschrieben, zur Verfügung.

Die Erfindung wird nachfolgend anhand von Ausführungsbeispielen und Zeichnungen näher beschrieben. Es zeigen:
- Fig. 1: schematische Darstellung einer Ausführungsform der Erfindung als Blockschaltbild;
- Fig. 2: eine Ausbildung der Erfindung;
- Fig. 3: Darstellung eines Beispiels aus dem Stand der Technik;
und
- Fig. 4: Detail einer weiteren Ausführungsform der Erfindung

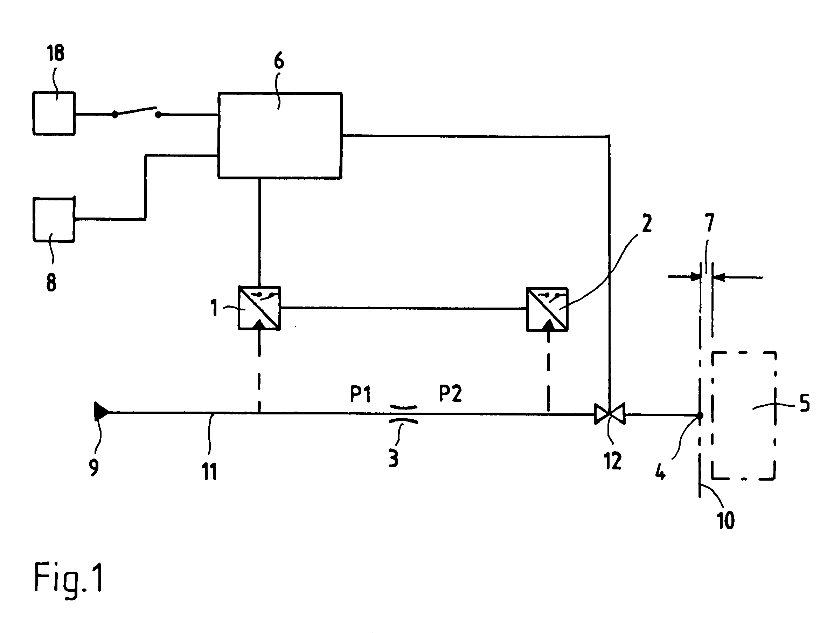

Die Fig. 1 zeigt eine schematische Darstellung einer Ausführungsform der Erfindung als Blockschaltbild. In dem Leitungssystem 11 ist eine Drosselstelle 3 angeordnet, wodurch sich zwei Drücke P1 und P2 in dem Leitungssystem 11 ergeben. In dem Leitungssystem weiterhin angeordnet ist ein Absperrhahn 12, der über eine Verbindung mit der Steuerung verbunden ist. Am Ende des Leitunssystems 11 in der Auflagefläche 10 befindet sich die Austrittsöffnung für die Flüssigkeit in der Nähe beziehungsweise korrespondierend zu dem Gegenstand 5, dessen Auflage kontrolliert werden soll. Mit dem Bezugszeichen 9 ist die Druckerzeugung für das Leitungssystem schematisch angedeutet. Es kann sich dabei um eine Pumpe beispielsweise handeln. An dem Leitungssystem 11 befinden sich vor der Drosselstelle 3 der erste Drucksensor 1 und nach der Drosselstelle 3 der zweite Drucksensor 2. Beide Drucksensoren 1 und 2 sind über eine Verbindungsleitung miteinander verbunden. Einer der beiden Drucksensoren ist dabei als sogenannter Mastersensor intelligent ausgebildet, wodurch er in der Lage ist, die erfaßten Werte des Druckes in elektrische Signale umzuwandeln und gleichzeitig die Druckdifferenz zwischen dem Drucksensor 1 und dem Drucksensor 2 zu ermitteln und an die Steuerung 6 weiterzugeben.

Die Steuerung 6 ist, wie bereits erwähnt, mit dem Absperrventil 12 verbunden. Das Absperrventil 12 wird beispielsweise dann betätigt, wenn die Maschinentüre geöffnet wird. Dies ist mit dem Schaltersymbol schematisch angedeutet. Damit soll verhindert werden, daß Kühl-/Schmierflüssigkeit austritt, wenn die Maschinentüre geöffnet wird. Eine weitere Verbindung ist von der Steuerung zur Werkzeugspindel gegeben. Diese wird dann angesteuert, wenn beispielsweise durch die Drucksensoren beziehungsweise die Steuerung erkannt wird, daß der Gegenstand 5, beispielsweise das Werkstück, nicht richtig positioniert ist. Dann wird die Werkzeugspindel nicht für die Bearbeitungsbewegung freigegeben, sondern erst dann, wenn der Gegenstand 5 sich in der exakt vorbestimmten Position befindet und dadurch die Endöffnung 4 zumindest teilweise verschlossen wird.

In dem dargestellten Ausführungsbeispiel ist ein Leckagespalt 7 an der Auflagefläche vorgesehen. Dieser ist jedoch bei der Erfindung nicht zwingend notwendig, sondern nur dann, wenn ständig ein Teil der Kühl-/Schmierflüssigkeit aus dem Leitungssystem austreten soll. Dies kann beispielsweise zu Kühl- und zu Schmierzwecken oder aber auch zu Reinigungszwecken geschehen. Der Gegenstand 5 kann aber auch genau an der Auflagefläche 10 positioniert werden, wenn dieser Leckagespalt 7 nicht vorgesehen ist. Deutlich erkennbar ist, daß das Leitungssystem 11 hier gleichzeitig das Kühl-/Schmierflüssigkeitssystem der Werkzeugmaschine sein kann. Es ist keine zusätzliche Leitung beziehungsweise kein zusätzliches Leitungssystem für eine Auflagekontrolle erforderlich. Es ist lediglich erforderlich, die Drucksensoren vor beziehungsweise hinter der Drosselstelle anzuordnen und gegebenenfalls eine Endöffnung 4 in einem vorhandenen Auflagesystem mit dem Kühl- /Spülflüssigkeitssystem zu verbinden. Deshalb ist auch die Nachrüstung einer Werkzeugmaschine mit einem Kühl- /Spülflüssigkeitskreislauf recht einfach zu realisieren.

Die Verbindung zur Steuerung der Werkzeugmaschine stellt eine bevorzugte Variante der Erfindung dar. Es ist in gleicher Weise jedoch auch möglich, eine separate Steuerung vorzusehen, die nur die hier angedeuteten Funktionen der Steuerung der Werkzeugspindel der Maschinentüre beziehungsweise des Absperrhahns und gegebenenfalls der Druckerzeugung vornimmt.

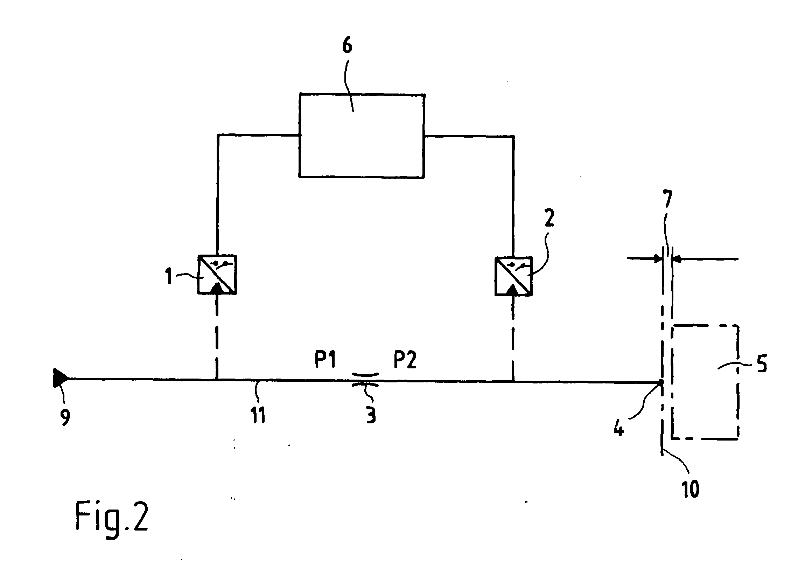

Die Fig. 2 zeigt eine weitere Ausbildung der Erfindung. Der wesentliche Unterschied zu der in Fig. 1 gezeigten Variante ist dadurch angegeben, daß die beiden Drucksensoren 1 und 2 gleichartig als einfache Sensoren ausgebildet sind. Die von den Sensoren gelieferten Signale der Werte des Druckes werden in der Steuerung 6 verarbeitet. Dies ist der einzige wesentliche Unterschied gegenüber der Ausbildung nach der Fig. 1. Alle anderen Merkmale können in gleicher Weise ebenfalls auch in der Ausführungsform nach der Fig. 2 vorgesehen sein. Dies betrifft beispielsweise das Absperrventil und die Verbindung zur Steuerung beziehungsweise zur Maschinentüre oder die Verbindung der Steuerung zur Werkzeugspindel. In gleicher Weise ist auch die Positionierung des Gegenstandes, beispielsweise des Werkstückes 5 beschrieben. Die Endöffnung 4 befindet sich ebenfalls in der Auflagefläche 10, wobei es in einer weiteren Ausführungsform der Erfindung auch hier vorgesehen sein kann, daß ein Leckagespalt 7 zwischen Auflagefläche 10 und einer der Seiten des zu positionierenden Gegenstandes vorgesehen ist.

Die Fig. 3 zeigt ein Beispiel aus dem Stand der Technik. Dabei ist es klar, daß neben dem Leitungssystem für die Kühl- beziehungsweise Spülflüssigkeit 11 ein weiteres Leitungssystem 17 für die Auflagekontrolle vorgesehen ist. Dieses ist nach dem Stand der Technik als reines pneumatisches System ausgeführt. Mit dem Bezugszeichen 19 ist ein Druckreduzierungsventil bezeichnet, das den notwendigen Druck für das System zur Verfügung stellt. Dabei ist es Aufgabe dieses Ventils, den Druck P1 konstant zu halten. In dem pneumatischen Leitungssystem 17 ist in gleicher Weise eine Drosselstelle 13 wie nach den Ausführungen der Erfindung vorgesehen. Es ist jedoch hier lediglich ein Drucksensor 14 vorhanden, der den absoluten Druck im Leitungssystem 17 als Staudruck mißt und gegebenenfalls an eine Steuerung, welche in dem Ausführungsbeispiel nach der Fig. 3 nicht dargestellt ist, weiterleitet. Parallel zu dem Leitungssystem 17 ist das Leitungssystem 11 dargestellt, welches das Kühl- und Schmierflüssigkeitsystem betrifft. Die Endöffnung (20) dieses Leitungssystems befindet sich in der Auflageebene beziehungsweise an der Auflagefläche 10, ebenso wie die Endöffnung 16 der Auflagedruckkontrolle in dieser Darstellung. Das Bezugszeichen 15 bezeichnet den Leckagespalt, über den ständig Druckluft austreten muß, um zu verhindern, daß Spül- oder Kühlflüssigkeit in das Leitungssystem 17 eindringt und welches gleichzeitig der Reinigung der Auflage- beziehungsweise Anlagefläche 10 dient.

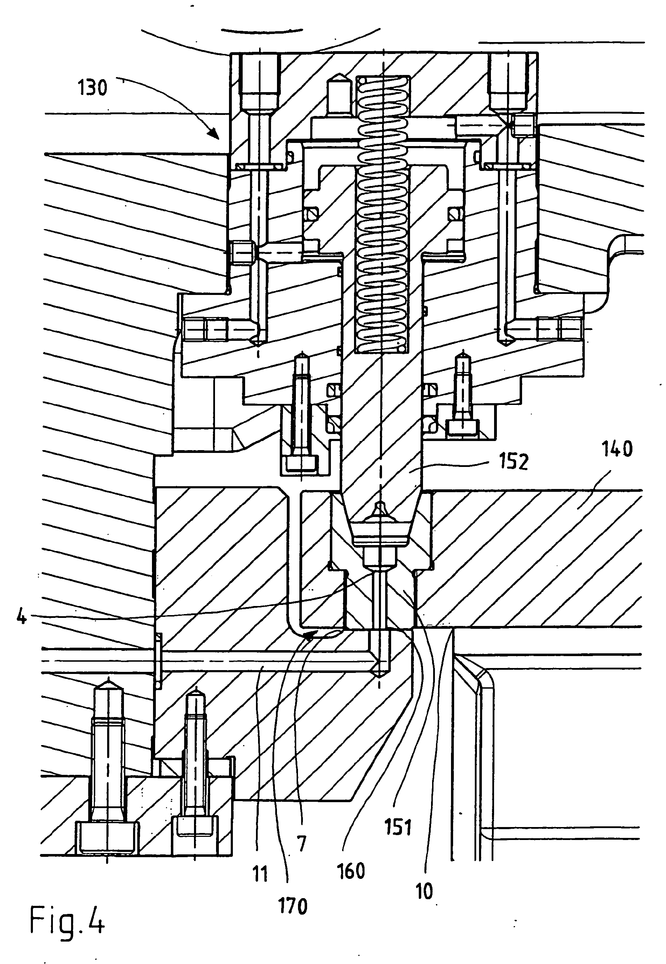

Die Figur 4 zeigt ein Detail einer weiteren Ausführungsform der Erfindung. Hierbei ist es vorgesehen, den Gegenstand 5 bzw. eine den Gegenstand 5 tragende Palette 140 auf der Auflagefläche 10 anzuordnen. Das Leitungssystem 11 befindet sich in der Werkzeugmaschine, beispielsweise in dem Auflagetisch. Die Werkzeugmaschine, gemäß der Ausführungsform der Figur 4, weist eine Spannvorrichtung 130 auf. Diese ist schematisch mit dem Pfeil angedeutet. Die Spannvorrichtung 130 besteht unter anderem aus in der Palette 140 vorgesehenen Spannvertiefungen 151, in die ein Spannbolzen 152 zum Spannen eingreift. Ist der Spannbolzen 152 korrekt in der Spannöffnung 151 angeordnet (wie dargestellt), wird der Spannbolzen gespannt und damit das Werkstück bzw. der Gegenstand auf die Palette gedrückt. Das Leitungssystem 11 mündet unterhalb der Palette in die Spannvertiefung 151. Dort ist die Endöffnung 4 des Leitungssystems 11 vorgesehen. Gemäß einer Variante der Erfindung ist es weiterhin vorgesehen, daß die Endöffnung 4 düsenartig ausgebildet ist. An der Verbindungsstelle, an der die Spannvertiefung 151, die in der Palette 140 angeordnet ist, die korrespondierend zum Leitungssystem positioniert wird, ist eine Schnellkupplung 160 vorgesehen. Diese kann beispielsweise durch geschliffene, selbstdichtende Flächen angegeben sein. Selbstverständlich ist es auch möglich, dort entsprechende Abdichtmittel, wie O-Ringe, Lippendichtungen oder dergleichen, vorzusehen. Der Leckage-Spalt 7 befindet sich an der Verbindungsstelle 170 bzw. der Auflagestelle der den Gegenstand 5 tragenden Palette 140. Die Auflagekontrollvorrichtung nutzt jetzt die Spannvorrichtung gleichzeitig als Auflagenkontrolle und Kontrolle des Spannvorgangs. Der Vorteil dieser Variante ist der, daß durch die Spül- bzw. Kühlflüssigkeit bei einer nicht korrekten Positionierung, insbesondere während des Spann- bzw. Positioniervorganges, die Sitzflächen für den Spannbolzen noch gereinigt werden. Dadurch kann austretende Spül- bzw. Kühlflüssigkeit über den Leckage-Spalt 7 beispielsweise abgeführt werden. Ist die Spannvorrichtung, respektive die Palette, korrekt positioniert, wird dies durch die Auflagenkontrolle selbstverständlich angezeigt bzw. zur Steuerung entsprechend signalisiert. Ist dies nicht der Fall, wird der Spann- bzw. Positioniervorgang abgebrochen, die Spannvorrichtung im oberen Teil mit dem Spannbolzen 152 nochmals angehoben und gegebenenfalls nochmals der Druck des Spül- bzw. Kühlsystems erhöht, um eventuell vorhandene Verschmutzungen aus der Spannöffnung 151 herauszuspülen bzw. von dem Spannbolzen 152 abzuspülen. Selbstverständlich ist erfindungsgemäß auch eine Umkehrung des Systems möglich, derart, daß die Kühl- bzw. Spülflüssigkeit an oder durch den Spannbolzen 152 geleitet wird, um dann von dort aus den Spannbolzen 152 und die Spannöffnung 151 zu reinigen. Der Vorteil dieser Variante ist, daß man neben einer Auflagenkontrolle gleichzeitig den Spannvorgang kontrollieren kann. Nur wenn der Spannbolzen ordnungsgemäß in der Spannöffnung 151 positioniert ist und wenn die Spannung erfolgte, ist beispielsweise das Leitungssystem 11 abgeschottet, so daß dies gegebenenfalls durch die Anzeigevorrichtung angezeigt bzw. durch die Steuerung erfaßt und signalisiert werden kann. Insofern ist diese Variante insbesondere dazu geeignet, neben aufwandsparenden Maßnahmen durch die Einsparung eines zusätzlichen Auflagekontroll-Leitungssystems eine erhebliche Sicherheit des Positionier- und Spannvorganges für das zu bearbeitende Werkstück bzw. den zu spannenden Gegenstand anzugeben.

Klar erkennbar sind aus den vorhergehenden Ausführungen die Nachteile des Standes der Technik gegenüber den in den Ausführungsformen beschriebenen Varianten der Erfindung. Zusammengefaßt ergeben sich folgende Vorteile:
- Die erfindungsgemäße Auflagekontrolle wird mit der gleichen Kühl-/Schmierflüssigkeit betrieben, die auch zum Spülen der Auflage verwendet wird und somit vorhanden ist.
- Auflagekontrolle nach der Erfindung kann auch mit Öl als Kühl-/Schmierflüssigkeit betrieben werden.
- Bei der Auflagekontrolle nach der Erfindung wird keine Vernebelung von Kühlmittel oder Öl verursacht.
- Die durch das neue Verfahren und die Vorrichtung zur Verfügung gestellte Auflage- und Spannkontrolle hat eine hohe Verfügbarkeit und Abfragesicherheit.
- Die erfindungsgemäße Auflagekontrollvorrichtung kann bei Bedarf auch an älteren Maschinen nachgerüstet werden, die noch kein Auflage- bzw. Spannkontrollsystem besitzen.
- Das neue Verfahren und die neue Auflagekontrollvorrichtung sind unabhängig von Leitungslängen, da das Kühlmittel inkompressibel ist.
- Durch die Inkompressibilität ist das neue Auflagekontrollsystem wesentlich schneller als bisherige pneumatische Auflagekontrollsysteme.
- Erfindungsgemäß werden keine eigenen Werkstückauflagen mit extra Verbohrungen benötigt, wodurch weniger Auflagevarianten entstehen. Insgesamt wird damit die Fertigung vereinfacht, die Ersatzteilbeschaffung und Lagerhaltung rationalisiert.
- Die neuartige Auflage- und Spannkontrolle ist unempfindlich gegen Kühlmittel, dadurch ist es beispielsweise nicht nötig "Dauer-Blasluft" zur Verfügung zu stellen, die das Eindringen von Kühlmitteln in das pneumatische Leitungssystem nach dem Stand der Technik verhindern muß.
- Zusätzlich werden keine bzw. geringe Mengen von Druckluft benötigt, so daß der Druckluftverbrauch insgesamt reduziert werden kann. Im Weiteren ist die neue Auflage- und Spannkontrolle wesentlich leiser als die bisherige. Dies ist durch Vermeidung der Blasgeräusche bedingt. Es wird ein niedrigerer Schallpegel (dB(a)-Wert) erhalten.

## Patentansprüche

1. Verfahren zur Auflagekontrolle in einer Werkzeugmaschine, nach einem der Ansprüche 8 - 18, wobei kontrolliert wird, ob ein Gegenstand (3) auf einer Auflagefläche (2a) in der Werkzeugmaschine korrekt angeordnet und/oder mittels einer ein erstes und ein zweites Spannmittel aufweisenden Spannvorrichtung gespannt ist, wobei ein in der Auflagefläche bzw. in dem ersten Spannmittel endendes, Medium führendes und druckbeaufschlagbares Leitungssystem verwendet wird, die Endöffnung des Leitungssystems von dem Gegenstand und/oder dem zweiten Spannmittel verdeckt wird und in dem Leitungssystem der Druck des Mediums an einer Drosselstelle reduziert wird, der Differenzdruck vor und nach der Drosselstelle bestimmt und zur Auflagenkontrolle bzw. Spannkontrolle ausgewertet wird, wobei als Medium die Kühl-/Schmierflüssigkeit, ein Luft-Kühlmittelgemisch oder die Luft-Kühlmittelspülung der Werkzeugmaschine verwendet wird, und ein Absperrventil (12) in dem Leitungssystem (11) nach dem zweiten Drucksensor (2) angeordnet ist, auf welches eine Mediumsteuerung wirkt, welches mit einer Maschinentür der Werkzeugmaschine gekoppelt ist, derart, dass das Absperrventil (12) bei Öffnung der Tür das Leitungssystem (11) absperrt.

2. Verfahren nach Anspruch 1, **dadurch gekennzeichnet, dass** als Leitungssystem das vorhandene Kühl-/Schmiermittel- oder Luft-/KühZmittelspülsystem der Werkzeugmaschine verwendet wird.

3. Verfahren nach einem der vorhergehenden Ansprüche, **dadurch gekennzeichnet, dass** wenigstens eine Endöffnung des Leitungssystems in bzw. an wenigstens einem Spannmittel zum Spannen des Gegenstandes vorgesehen ist und zur Auflagen- oder Spannkontrolle mit dem Medium beaufschlagt wird und/oder die Endöffnung des Leitungssystems, die Auflage bzw. die Spannfläche, durch das Medium für einen Auflage- bzw. Spannvorgang gereinigt wird und/oder wenigstens eine Endöffnung des Leitungssystems in bzw. an wenigstens einem Spannmittel, z.B. in öffnungen für das Eingreifen von Spannbolzen, vorgesehen ist, und diese vor oder während des Spannvorgangs mit dem Medium gespült wird.

4. Verfahren nach einem der vorhergehenden Ansprüche, **dadurch gekennzeichnet, dass** der Gegenstand für den Positionier- bzw. Spannvorgang gegebenenfalls nochmals angehoben wird, wenn eine unkorrekte Positionierung und/oder Spannung festgestellt wird, um die Auflagefläche und/oder die Endöffnung und/oder die Spannmittel durch das Medium zu reinigen und anschließend der Positionier- bzw. Spannvorgang wiederholt wird.

5. Verfahren nach einem der vorhergehenden Ansprüche, **dadurch gekennzeichnet, dass** der Differenzdruck permanent erfasst, verrechnet und als Signal zur Steuerung einer Werkzeugmaschine genutzt wird und/oder die Verrechnung des Differenzdrucks in einer Steuerung, vorzugsweise in der Maschinensteuerung der Werkzeugmaschine, vorgenommen wird und/oder die Verrechnung des Differenzdrucks in wenigstens einem der Drucksensoren erfolgt.

6. Verfahren nach einem der vorhergehenden Ansprüche, **dadurch gekennzeichnet, dass** der Druck beziehungsweise der Differenzdruck auf einen Sollwert eingestellt wird, bei dessen Erreichen beziehungsweise Unterschreiten die Steuerung einen Schaltvorgang, beispielsweise einen Signalwechsel vornimmt und/oder der Eingangsdruck vor der Drosselstelle ebenfalls ausgewertet wird und/oder in Abhängigkeit des Eingangsdrucks und des Differenzdrucks von der Steuerung ausgewertet wird, ob ein Gegenstand an der Auflagefläche anliegt oder nicht und/oder der Differenzdruck im Leitungssystem zusätzlich oder ausschließlich zur Bestimmung der Durchflußmenge von Kühl-/Schmierflüssigkeit verwendet wird.

7. Verfahren nach einem der vorhergehenden Ansprüche, **dadurch gekennzeichnet, dass** in Abhängigkeit des Eingangsdruckes und des Differenzdruckes die Durchflußmenge an Kühl-/Schmierflüssigkeit von der Steuerung bestimmt und ausgewertet wird, ob ein ausreichender Volumenstrom zur Kühlung und/oder Schmierung des Werkstückes, der Spindel beziehungsweise des Werkzeuges vorhanden ist oder nicht und/oder die Steuerung beziehungsweise die Maschinensteuerung der Werkzeugmaschine den oder die Werte der Druckdifferenz zur Bestimmung der Durchflußmenge an Kühl-/Schmiermittel auswertet und bei Unterschreitung eines festgelegten Sollwertes daraus resultierende Steuerbefehle an die Werkzeugmaschine weiterleitet und/oder die Kühl-/Schmierflüssigkeitsdurchflußmenge durch das Werkstück und/oder das Werkzeug und/oder die Spindel ausgewertet wird.

8. Werkzeugmaschine mit einer Auflagekontrollvorrichtung zur Auflagekontrolle bzw. der Kontrolle des Spannens von Gegenständen (5) auf einer Auflagefläche (10) bzw. in oder an den Spannmitteln (150) einer Spannvorrichtung (130) der Werkzeugmaschine, insbesondere zur Durchführung des Verfahrens nach einem oder mehreren der vorhergehenden Ansprüche, wobei in der Auflagefläche (10) bzw. in bzw. an wenigstens einem ersten Spannmittel (150) in mit Druck beaufschlagbares, Medium führendes Leitungssystem (11) in wenigstens einer Endöffnung (4) endet, wobei die Endöffnung (4) von dem Gegenstand (5) und/oder von einem zweiten Spannmittel verdeckt wird, wobei in dem Leitungssystem (11) eine Drosselstelle (3), vor und nach der Drosselstelle je ein Drucksensor (1, 2) vorgesehen ist und der Differenzdruck der von den Drucksensoren (1, 2) ermittelten Drücke bestimmt wird, **dadurch gekennzeichnet, dass** das Leitungssystem (11) durch das Kühl-/Schmiermittelleitungssystem der Werkzeugmaschine angegeben ist, und dass ein Absperrventil (12) in dem Leitungssystem (11) nach dem zweiten Drucksensor (2) angeordnet ist, auf welches eine Mediumsteuerung wirkt, welches mit einer Maschinentür der Werkzeugmaschine gekoppelt ist, derart, dass das Absperrventil (12) bei Öffnung der Tür das Leitungssystem (11) absperrt.

9. Werkzeugmaschine nach Anspruch 8, **dadurch gekennzeichnet, dass** zur Erzeugung der Druckdifferenz als Drosselstelle (3) mindestens eine Drossel, Blende, Düse, Rohrstrecke oder dergleichen vorgesehen ist und/oder wenigstens einer der Drucksensoren (1, 2) als intelligenter Drucksensor ausgebildet ist, derart, dass er die von den Drucksensoren ermittelten Werte des Druckes in Werte der Druckdifferenz verrechnet, in Signale umwandelt und an die Steuerung weiterleitet und/oder der Verfahrensdruck der Vorrichtung im Niederdruckbereich bis 10 bar, vorzugsweise bis 2,5 bar, eingestellt wird.

10. Werkzeugmaschine nach einem der vorhergehenden Ansprüche 8 und 9, **dadurch gekennzeichnet, dass** eine Spannvorrichtung (130) vorgesehen ist, mit Spannmitteln (150), mittels derer der Gegenstand (5) oder eine den Gegenstand (5) tragende Palette (140) aufspannbar ist und wenigstens ein Spannmittel (150) mit dem Leitungssystem (11) verbunden ist und/oder wenigstens eines der Spannmittel (150) an dem Gegenstand (5) vorgesehen ist und/oder wenigstens eines der Spannmittel (150) an der den Gegenstand tragenden Palette (140) vorgesehen ist.

11. Werkzeugmaschine nach einem der vorhergehenden Ansprüche 8 bis 10, **dadurch gekennzeichnet, dass** die Endöffnung (4) in wenigstens einem der Spannmittel (150) für das Spannen des Gegenstandes (5) vorgesehen ist und/oder die Endöffnung (4) des Leitungssystems in wenigstens einer Spannvertiefung (151) als Spannmittel der den Gegenstand tragenden Palette (140) vorgesehen ist und/oder die Endöffnung (4) des Leitungssystems in wenigstens einem Spannbolzen (152) als Spannmittel der Spannvorrichtung (130) vorgesehen ist.

12. Werkzeugmaschine nach einem der vorhergehenden Ansprüche 8 bis 11, **dadurch gekennzeichnet, dass** zwischen Werkzeugmaschine und Palette (140) bzw. werkstück eine Dichtung, Dichtfläche oder eine Kupplung, vorzugsweise eine Schnellkupplung (160) im Leitungssystem (11) vorgesehen ist und/oder die Endöffnung (4) düsenartig ausgebildet ist.

13. Werkzeugmaschine nach einem der vorhergehenden Ansprüche 8 bis 12, **dadurch gekennzeichnet, dass** eine Steuerung (6) vorgesehen ist, die die Werte des Druckes, die von den Drucksensoren (1, 2) ermittelt beziehungsweise geliefert werden als Schaltsignal erfasst und auswertet und/oder beide Drucksensoren (1, 2) als einfacher Drucksensor ausgebildet sind und die Steuerung die Werte der Druckdifferenz verrechnet beziehungsweise auswertet.

14. Werkzeugmaschine nach einem der vorhergehenden Ansprüche 8 bis 13, **dadurch gekennzeichnet, dass** die Maschinensteuerung der Werkzeugmaschine als Steuerung (6) der Auflagekontrollvorrichtung vorgesehen ist, derart, dass sie die Werte der Drucksensoren (1, 2) erfasst, auswertet und gegebenenfalls daraus resultierende Steuerbefehle an die Werkzeugmaschine weiterleitet und/oder die Drosselstelle (3) bzw. die Mittel zur Druckreduzierung und die Drucksensoren (1, 2) in dem Kühl-/ Schmierflüssigkeitskreislauf der Werkzeugmaschine angeordnet sind.

15. Werkzeugmaschine nach einem der vorhergehenden Ansprüche 8 bis 14, **dadurch gekennzeichnet, dass** als Gegenstand (5), dessen Auflage kontrolliert wird, ein zu bearbeitendes Werkstück und/oder das Bearbeitungswerkzeug und/oder ein Anschlag vorgesehen ist.

16. Werkzeugmaschine nach einem der vorhergehenden Ansprüche 8 bis 15, **dadurch gekennzeichnet, dass** die Auflagefläche (10) an einem Werkstückträger einer Werkstückaufnahme oder einer Werkzeugaufnahme, insbesondere am Spindelkopf der Bearbeitungsspindel einer Werkzeugmaschine, angeordnet ist und/oder ein Leckagespalt (7) vorgesehen ist, über den ein Teil des Mediums zu Kühl- und Schmierzwecken ständig entweicht und/oder der Leckagespalt (7) an der Verbindungsstelle (170) bzw. Auflagestelle der den Gegenstand (5) tragenden Palette (14) zur Werkzeugmaschine vorgesehen ist.

17. Werkzeugmaschine nach einem der vorhergehenden Ansprüche 8 bis 16, **dadurch gekennzeichnet, dass** das Leitungssystem (11) gleichzeitig der Auflagenkontrollvorrichtung wie der Leitung von Kühl- und Schmierflüssigkeit als Medium dient und/oder das Leitungssystem (11) mit der Werkzeugspindel und/oder dem werkstück und/oder dem Werkzeug beziehungsweise der Werkzeugauflage zur Bestimmung der Durchflußmenge an Kühl-/Schmiermittel verbunden ist.

18. Werkzeugmaschine nach einem der vorhergehenden Ansprüche 8 bis 17, **dadurch gekennzeichnet, dass** die Steuerung (6) und/oder einer der Drucksensoren (1, 2) derart ausgebildet sind, daß sie die Durchflußmenge an Kühl-/Schmiermittel anhand der Druckdifferenz im Leitungssystem bestimmen.

## Claims

1. Method for support control in a machine tool according to one of the claims 8 - 18, where it is controlled whether an object (3) is arranged correctly on a support surface (2a) in the machine tool, and/or is clamped by means of a clamping device having a first and a second clamping means, a pressurised duct system conducting a medium being used which ends in the support surface or in the first clamping means, the final opening of the duct system being covered by the object and/or the second clamping means, and in the duct system the pressure of the medium being reduced at a choke point, the differential pressure being determined before and after the choke point, and being evaluated for the support control or clamping control, wherein as medium the coolant/lubricant, an air coolant mixture or the air coolant rinsing of the machine tool is used, and a shut-off valve (12) is arranged in the duct system (11), on which a medium control acts, after the second pressure sensor (2) coupled preferably with a machine door of the machine tool in such a way that the shut-off valve (12) shuts off the duct system (11) when the door is opened.

2. Method according to claim 1, **characterised in that** as duct system the existing coolant/lubricant or air/coolant rinsing system of the machine tool is used.

3. Method according to one of the preceding claims, **characterised in that** at least one final opening of the duct system is provided in or at at least one clamping means for clamping the object, and is impinged with the medium for control of the support or clamping, and/or the final opening of the duct system, the support or the clamping surface is cleaned by the medium for a support or clamping process, and/or at least one final opening of the duct system is provided in or at at least one clamping means, for example in openings for the engagement of clamping bolts, and this is rinsed with the medium before or during the clamping process.

4. Method according to one of the preceding claims, **characterised in that** the object, if necessary, is lifted one more time for the positioning or clamping process if an inaccurate positioning and/or clamping has been determined in order to clean either the support surface and/or the final opening and/or the clamping means with the medium and, after that, the positioning or clamping process is repeated.

5. Method according to one of the preceding claims, **characterised in that** the differential pressure is permanently collected, processed and used as signal for the control of a machine tool, and/or the processing of the differential pressure is carried out in a control, preferably in the machine control of the machine tool, and/or the processing of the differential pressure is carried out in at least one of the pressure sensors.

6. Method according to one of the preceding claims, **characterised in that** the pressure or the differential pressure is set to a set point, and, when it is reached or the pressure falls below it, the control carries out a switch operation, for example a change of signals, and/or the supply pressure before the choke point is also evaluated, and/or depending on the supply pressure and the differential pressure it is evaluated by the control whether an object rests or not on the support surface, and/or the differential pressure in the duct system is used additionally or exclusively for determining the flow rate of coolant/lubricant.

7. Method according to one of the preceding claims, **characterised in that** depending on the supply pressure and the differential pressure the flow volume of coolant/lubricant is determined and evaluated by the control whether or not there is either a sufficient volume flow for cooling and/or lubricating the work piece, the spindle or the tool, and/or the control or the machine control of the machine tool evaluates the value(s) of the pressure difference for determining the volume flow of coolant/lubricant, and, if it falls below a defined set point, transmits resulting control commands to the machine tool, and/or the flow volume of coolant/lubricant through the work piece and/or the tool and/or the spindle is evaluated.

8. Machine tool with a support control device for the support control or the control of the clamping of objects (5) on a support surface (10) or in or at the clamping means (150) of a clamping device (130) of the machine tool, in particular for carrying out the method according to one or more of the preceding claims, wherein in the support surface (10) or in or at at least one first clamping means (150) a pressurised duct system (11) which carries a medium ends in at least one final opening (4), wherein the final opening (4) is covered by the object (5) and/or by a second clamping means, wherein in the duct system (11) a choke point (3), before and after the choke point each a pressure sensor (1, 2) is provided, and the differential pressure is determined by pressures collected by the pressure sensors (1, 2), **characterised in that** the duct system (11) is determined by the coolant/lubricant duct system of the machine tool, and that a shut-off valve (12) is arranged in the duct system (11) after the second pressure sensor (2) on which a medium control acts coupled with a machine door of the machine tool in such a way that the shut-off valve (12) shuts off the duct system (11) when the door is opened.

9. Machine tool according to claim 8, **characterised in that** in order to generate the pressure difference as choke point (3) at least one choke, orifice, nozzle, tube section, or the like is provided, and/or at least one of the pressure sensors (1, 2) is designed as intelligent pressure sensor in such a way that it processes the values of the pressure collected by the pressure sensors into values of the pressure difference, changes then into signals and transmits them to the control, and/or the pressure of the process of the device is set in the low pressure region up to 10 bars, preferably up to 2.5 bars.

10. Machine tool according to one of the preceding claims 8 and 9, **characterised in that** a clamping device (130) is provided, with clamping means (150) by means of which the object (5) or a pallet (140) carrying the object (5) can be clamped, and at least one clamping means (150) is connected with the duct system (11), and/or at least one of the clamping means (150) is provided at the object (5), and/or at least one of the clamping means (150) is provided at the pallet (140) carrying the object.

11. Machine tool according to one of the preceding claims 8 to 10, **characterised in that** the final opening (4) is provided in at least one of the clamping means (150) for the clamping of the object (5), and/or the final opening (4) of the duct system is provided in at least one clamping indentation (151) as clamping means of the pallet (140) carrying the object, and/or the final opening (4) of the duct system is provided in at least one clamping bolt (152) as clamping means of the clamping device (130).

12. Machine tool according to one of the preceding claims 8 to 11, **characterised in that** between machine tool and pallet (140) or work piece a sealing, sealing surface or a coupling, preferably an in-line quick coupling (160) is provided in the duct system (11), and/or the final opening (4) is designed nozzle-like.

13. Machine tool according to one of the preceding claims 8 to 12, **characterised in that** a control (6) is provided which collects and evaluates the values of the pressure determined or transmitted by the pressure sensors (1, 2) as a switch signal, and or both pressure sensors (1, 2) are designed as simple pressure sensors, and the control processes or evaluates the values of the pressure difference.

14. Machine tool according to one of the preceding claims 8 to 13, **characterised in that** the machine control of the machine tool is provided as control (6) of the support control device in such a way that it collects the values of the pressure sensors (1, 2), evaluates them and, if necessary, transmits resulting control commands to the machine tool, and/or the choke point (3) or the means for reducing the pressure and the pressure sensors (1, 2) are arranged in the coolant/lubricant circuit of the machine tool.

15. Machine tool according to one of the preceding claims 8 to 14, **characterised in that** as an object (5) the support of which is controlled a work piece to be machined and/or the tool and/or a stopper is provided.

16. Machine tool according to one of the preceding claims 8 to 15, **characterised in that** the support surface (10) is arranged at a work piece carrier, a work piece receiver or a tool receiver, in particular at the spindle head of the machining spindle of a machine tool, and/or a leakage gap (7) is provided through which a part of the medium for cooling and lubricating purposes escapes permanently, and/or the leakage gap (7) is provided at the junction point (170) or the support point of the pallet (14) carrying the object (5) to the machine tool.

17. Machine tool according to one of the preceding claims 8 to 16, **characterised in that** the duct system (11) serves at the same time for the support control as well as the conduction of coolant and lubricant as medium, and/or the duct system (11) is connected with the tool spindle and/or the work piece and/or the tool or the tool support for determining the flow volume of coolant/lubricant.

18. Machine tool according to one of the preceding claims 8 to 17, **characterised in that** the control (6) and/or one of the pressure sensors (1, 2) are designed in such a way that they determine the flow volume of coolant/lubricant from the pressure difference in the duct system.

## Revendications

1. Procédé de contrôle de positionnement utilisé dans une machine-outil selon une des revendications 8-18 permettant de contrôler le positionnement correct d'un objet (3) sur une surface d'appui (2a) et/ou dans un dispositif de saisie comportant un premier et un deuxième moyen de saisie, ce procédé utilise un système de tuyaux, remplis d'une substance sous pression, dont l'extrémité est située au niveau de la surface d'appui ou dans le premier moyen de saisie et obturée par l'objet et/ou par le deuxième moyen de saisie, et dont la pression est réduite par un dispositif d'étranglement créant une différence de pression entre son entrée et sa sortie qui est utilisée afin de contrôler la précision du positionnement ou de la saisie, le système de tuyaux (11) est rempli d'une substance pouvant être le liquide de refroidissement ou de lubrification, un mélange d'air liquide lubrifiant ou d'air liquide refroidissant de la machine-outil et comporte une vanne d'arrêt (12) derrière un deuxième capteur de pression (2) pilotée par une unité de contrôle couplée à une porte du châssis de la machine-outil de façon à ce que l'ouverture de cette porte provoque la fermeture de la vanne d'arrêt (12) et ainsi celle du système de tuyaux (11).

2. Procédé selon la revendication 1, **caractérisé en ce qu'**il utilise comme système de tuyaux celui déjà existant du système de refroidissement, de lubrification à air ou à un liquide de refroidissement ou de lubrification de la machine-outil.

3. Procédé selon une des revendications précédentes, **caractérisé en ce que** le système de tuyaux rempli d'une substance possède au moins une extrémité ouverte située au niveau d'au moins un moyen de saisie immobilisant l'objet, et pouvant être mise sous pression afin de contrôler le positionnement ou la saisie de l'objet et/ou en ce que l'ouverture est située de façon à pouvoir rincer et nettoyer la surface d'appui ou la surface de saisie avant le procédé de positionnement ou de saisie et/ou **en ce qu'**au moins une ouverture est située au niveau d'au moins un moyen de saisie, par exemple, au niveau d'ouvertures pour les goujons de serrage mobiles du système, permettant de les rincer avant et pendant le mouvement de serrage.

4. Procédé selon une des revendications précédentes, **caractérisé en ce que** l'objet à positionner ou à saisir peut, dans le cas constaté d'un mauvais positionnement et/ou d'une saisie incorrecte, être soulevé de nouveau afin de nettoyer la surface d'appui et/ou de l'ouverture du tuyau et/ou du moyen de saisie par la substance puis de réinitialiser le procédé de positionnement ou de la saisie.

5. Procédé selon une des revendications précédentes, **caractérisé en ce que** la différence des pressions est mesurée et utilisée en permanence et sert comme signal pour le pilotage d'une machine-outil et/ou **en ce que** le calcul de la différence des pressions est calculé dans un système de contrôle et de préférence dans le système de contrôle de la machine-outil et/ou **en ce que** le calcul de la différence des pressions est effectué dans au moins un des capteurs de pression.

6. Procédé selon une des revendications précédentes, **caractérisé en ce que** la pression mesurée ou la différence des pressions mesurées est comparée à une valeur cible et, en dessous de laquelle ou à une valeur égale à celle-ci, le système de contrôle déclenche un signal ou un changement de signal et/ou **en ce que** la pression à l'entrée du dispositif d'étranglement est également prise en compte et/ou **en ce que** le système de contrôle prend en compte la pression d'entrée et la différence de pression afin de déterminer si un objet est correctement positionné sur la surface d'appui ou non, et/ou **en ce que** la différence des pressions dans le système des tuyaux est en plus ou exclusivement utilisée afin de déterminer le débit du liquide de refroidissement ou de lubrifiant.

7. Procédé selon une des revendications précédentes, **caractérisé en ce que** le système de contrôle ajuste et fixe le débit du liquide de refroidissement ou de lubrification en fonction de la pression d'entrée et de la différence des pressions et détermine si le débit est suffisant ou non pour le refroidissement et/ou la lubrification de la pièce à usiner, de la broche porte-outil et de l'outil et/ou **en ce qu'**un système de contrôle ou le système de contrôle de la machine-outil calcul à partir de la différence des pressions le débit du liquide de refroidissement ou de lubrifiant et émet lors d'un dépassement en dessous d'une valeur spécifiée des signaux à la machine-outil et/ou **en ce que** le débit du liquide de refroidissement ou du lubrifiant est analysé par la pièce en cours d'usinage et/ou par l'outil et/ou par la broche porte-outil.

8. Machine-outil comportant un dispositif de contrôle de positionnement permettant de contrôler la position d'objets (5) sur une surface d'appui (10) ou lors de leur immobilisation par des moyens de saisie (150) dans un dispositif de saisie (130) de la machine-outil, en particulier pour utiliser le procédé suivant une ou plusieurs des revendications précédentes avec un système de tuyaux (11), remplis d'une substance sous pression, dont l'ouverture (4) est située au niveau de la surface d'appui ou au moins dans le premier moyen de saisie (150) est obturée par l'objet et/ou par le deuxième moyen de saisie, et dont la pression est réduite par un système réducteur (3), avec à son entrée et à sa sortie un capteur de pression (1, 2) dont les mesures permettent de déterminer la différence de pression, **caractérisée en ce que** le système de tuyaux (11) est rempli d'une substance pouvant être le liquide de refroidissement ou de lubrification, un mélange d'air liquide lubrifiant ou d'air liquide refroidissant de la machine-outil et comporte une vanne d'arrêt (12) derrière le deuxième capteur de pression (2) pilotée par une unité de contrôle couplée à une porte du châssis de la machine-outil de façon à ce que l'ouverture de cette porte provoque la fermeture de la vanne d'arrêt (12) et ainsi celle du système de tuyaux (11).

9. Machine-outil selon la revendication 8, **caractérisée en ce que** la différence de pression est créée par un dispositif d'étranglement (3) qui peut être un réducteur, un étranglement, une buse, un morceau de tuyau ou un élément similaire et/ou **en ce qu'**au moins un des capteurs de pression (1, 2) est un capteur "intelligent" c'est-à-dire, qu'il est capable de calculer à partir des valeurs de pression des capteurs la différence des pressions qu'il transforme en signaux qu'il transmet vers le système de contrôle et/ou **en ce que** la pression utilisée par ce dispositif est une pression basse et ajustée de préférence en dessous de 2,5 bar.

10. Machine-outil selon une des revendications précédentes 8 et 9, **caractérisée en ce qu'**il existe un dispositif de saisie (130) avec des moyens de saisie (150) permettant d'immobiliser un objet (5) ou une palette (140) comportant l'objet (5) dont au moins un moyen de saisie (150) est connecté au système de tuyaux (11) et/ou au moins un moyen de saisie (150) est situé au niveau de l'objet (5) et/ou au moins un moyen de saisie (150) est situé au niveau de la palette (140) comportant l'objet (5).

11. Machine-outil selon une des revendications précédentes 8 à 10, **caractérisée en ce que** l'ouverture (4) permet d'immobiliser l'objet (5) avec au moins un des moyens de saisie (150) et/ou **en ce que** l'ouverture (4) de l'extrémité du système des tuyaux située au moins dans un enfoncement (151) est un moyen de saisie de la palette (140) comportant l'objet et/ou **en ce que** l'ouverture (4) de l'extrémité du système des tuyaux est située à l'intérieur d'au moins un goujon de serrage (152) comme moyen de saisie intégrant le dispositif de saisie.

12. Machine-outil selon une des revendications précédentes 8 à 11, **caractérisée en ce qu'**il existe un joint d'étanchéité, une surface d'étanchéité ou un couplage étanche, de préférence un couplage rapide (16) dans le système des tuyaux (11) entre la machine-outil et la palette (140) ou la pièce à usiner et/ou **en ce que** l'ouverture (4) de l'extrémité du système des tuyaux possède une forme de tuyère.

13. Machine-outil selon une des revendications précédentes 8 à 12, **caractérisée en ce qu'**il existe un système de contrôle (6) saisissant et analysant les valeurs des pressions mesurées par des capteurs de pression (1, 2) en les transformant en un signal de déclenchement et/ou **en ce que** les deux capteurs de pression (1, 2) sont des capteurs de pression simples nécessitant que le système de contrôle calcule et analyse les valeurs de la différence de pression.

14. Machine-outil selon une des revendications précédentes 8 à 13, **caractérisée en ce que** le système de contrôle de la machine-outil remplit la fonction de système de contrôle (6) du dispositif de contrôle de positionnement de façon à ce qu'il saisisse et analyse les valeurs mesurées par les capteurs de pression (1, 2) puis, le cas échéant à ce qu'il transmette des signaux de commande vers la machine-outil et/ou **en ce que** le dispositif d'étranglement (3) ou les moyens de réduction de la pression ainsi que les capteurs de pression (1, 2) sont intégrés dans le circuit de refroidissement ou de lubrifiant de la machine-outil.

15. Machine-outil selon une des revendications précédentes 8 à 14, **caractérisée en ce que** l'objet (5), dont le positionnement est à contrôler, est une pièce à usiner et/ou l'outil d'usinage et/ou une butée.

16. Machine-outil selon une des revendications précédentes 8 à 15, **caractérisée en ce que** la surface d'appui (10) est située au niveau d'un support de la pièce à usiner, d'un dispositif de réception d'une pièce à usiner ou d'un dispositif de réception d'un outil d'usinage, en particulier d'une extrémité d'arbre de rotation portant l'outil d'usinage d'une machine-outil et/ou **en ce qu'**il existe une fente (7) permettant à une partie de la substance de fuir en permanence à des fins de refroidissement ou de lubrification et/ou **en ce que** la fente (7) est située au niveau de la connexion (170) ou d'appui entre la palette (140) comportant l'objet (5) et la machine-outil.

17. Machine-outil selon une des revendications précédentes 8 à 16, **caractérisée en ce que** le système des tuyaux (11) sert simultanément au dispositif de contrôle du positionnement et à conduire le liquide de refroidissement et de lubrifiant et/ou **en ce que** le système de tuyaux (11) est lié à la broche porte-outil et/ou à la pièce à usiner et/ou à l'outil ou dispositif recevant l'outil afin de déterminer le débit du liquide de refroidissement ou de lubrifiant.

18. Machine-outil selon une des revendications précédentes 8 à 17, **caractérisée en ce que** le système de contrôle (6) et/ou un des capteurs de pression (1, 2) est configuré de façon à ce qu'il puisse déterminer le volume délivré de liquide de refroidissement ou de lubrifiant à l'aide de la différence des pressions dans le système des tuyaux.
